# EUROPEAN PATENT APPLICATION

(11) **EP 4 498 730 A2**
(43) Date of publication of application: **29.01.2025**
(21) Application number: 24185131.0
(22) Date of filing: 27.06.2024
(51) Int. Cl.: H04W 48/14, H04W 12/08, H04W 84/12, H04W 48/12

(54) **SYSTEMS FOR AND METHODS OF COMMUNICATION IN A NETWORK USING A DATA REQUEST OR RESPONSE**

(30) Priority: 28.06.2023 US 202318343529
(71) Applicant: Avago Technologies International Sales Pte. Limited, Singapore 768923 (SG)
(72) Inventor: Buhari, Nizamudeen, Irvine, 92618 (US); H K, Mahesh Dutta, Irvine, 92618 (US); Sahoo, Jimut, Irvine, 92618 (US)
(74) Representative: Dilg, Haeusler, Schindelmann Patentanwaltsgesellschaft mbH

(57) **Abstract**

Systems and methods use a protocol for requests and responses. A device can include a circuit (233) configured to provide at least one frame across a connection to a second device (102, 204, 206, 208, 224). The frame includes a first field including a value indicating requested information from the second device (102, 204, 206, 208, 224), The value can indicate timing information, load information, occupancy level information, target channel information, signal power information, sequence information, neighborhood access point information, or unicast information.

## Description

### Field of the Disclosure

This disclosure generally relates to systems for and methods of communication between an access point (AP) and a client device (e.g., a station (STA)) or between other communication devices. In some embodiments, this disclosure generally relates to systems and methods related to data requests or responses including but not limited to an on-demand data request and/or response protocol.

### Background of the Disclosure

In the last few decades, the market for wireless communications devices has grown by orders of magnitude, fueled by the use of portable devices, and increased connectivity and data transfer between all manners of devices. Digital switching techniques have facilitated the large scale deployment of affordable, easy-to-use wireless communication networks. Furthermore, digital and radio frequency (RF) circuit fabrication improvements, as well as advances in circuit integration and other aspects have made wireless equipment smaller, cheaper, and more reliable. Wireless communication can operate in accordance with various standards such as IEEE 802.11x, Bluetooth, global system for mobile communications (GSM), code division multiple access (CDMA), etc. As higher data throughput and other changes develop, newer standards are constantly being developed for adoption, such as a progression from IEEE 802.11n to IEEE 802.11ac.

Certain data may not available under certain protocols, and some data can require waiting for its availability under certain protocols. Data unavailability and waiting for data can contribute to communication overhead.

### Brief Description of the Drawings

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1A is a block diagram depicting a network environment including one or more access points (APs) in communication with one or more devices or stations (STAs), according to some embodiments.
FIGS. 1B and 1C are block diagrams depicting computing devices useful in connection with the methods and systems described herein, according to some embodiments.
FIG. 2A is a block diagram depicting a network including APs and STAs according to some embodiments.
FIG. 2B is a more detailed block diagram of an AP or STA of the network illustrated in FIG. 2A configured for a data request or response operation according to some embodiments.
FIG. 3 is a block diagram depicting a request frame for a data request operation according to some embodiments.
FIG. 4 is a block diagram depicting a response frame for a data response operation according to some embodiments.

The details of various embodiments of the methods and systems are set forth in the accompanying drawings and the description below.

### Detailed Description

The following IEEE standard(s), including any draft versions of such standard(s), are hereby incorporated herein by reference in their entirety and are made part of the present disclosure for all purposes: WiFi Alliance standards and IEEE 802.11 standards including but not limited to IEEE 802.11a^{™}, IEEE 802.11b^{™}, IEEE 802.11g^{™}, IEEE 802.11be^{™}, IEEE P802.11n^{™}; IEEE P802.11ax^{™}; and IEEE P802.11ac^{™} standards. Although this disclosure can reference aspects of these standard(s), the disclosure is in no way limited by these standard(s).

For purposes of reading the description of the various embodiments below, the following descriptions of the sections of the specification and their respective contents can be helpful:
- Section A describes a network environment and computing environment which can be useful for practicing embodiments described herein; and
- Section B describes embodiments of protocols for data request/response operations and methods and devices using such protocols.

Various embodiments disclosed herein are related to a protocol for data request and/or response operations for devices communicating on a network. In some embodiments, a protocol is provided for a WiFi network (e.g., IEEE 802.11 network, etc.), a cellular network, point to point communications, or combinations thereof. The protocol can be a used with a Wi-Fi AP to enhance data availability and reduce time to obtain data in some embodiments. In some embodiments, an on-demand get data request/response (ODGDR) can be provided according to the protocol. In some embodiments, a connected/associated Wi-Fi client (STA) can request or query the connected AP for particular data from the AP on a demand basis. The requested data can be information that is useful in improving the operation of the client device. In some embodiments, an ODGR protocol can be used with any devices (e.g., all WiFi devices that support protected management frames).

The amount of data (e.g., statistics, information, or other data) being maintained at the AP side of the network is significantly large. Generally, the data is related to its existing client devices, neighborhood WiFi networks, and/or the AP network backbone. The amount of data can be so large that all the data cannot be sent by the AP periodically, and all of the data is not necessarily relevant to each device in the network. In some embodiments, the systems and methods allow a client device to request and receive specific data from an AP without requesting large amounts of data or data that may not be relevant to the client device. In some embodiments, the systems and methods allow the client device to request and receive information that is provided in a beacon frame or a probe response frame without waiting for the scheduled transmission of such frames. In some embodiments, the ODGDR protocol reduces the importance of beacon frame or probe response frame reception in certain situations and allows some of the data that is presently unavailable in the existing beacon/probe response to be provided. In some embodiments, time is saved using the ODGDR protocol because data can be obtained without waiting for the next beacon frame, probe response frame, or other like frames (e.g., control or management frames). In some embodiments, the data may include information useful for a handoff operation.

In some embodiments, a handoff operation may refer to an operation where a device is transferred from one AP to another AP. In some embodiments, the device is associated with a first AP (e.g., a connection is formed after discovery, authentication and association operations) and is associated with a second AP after the handoff operation. In some embodiments, a WiFi network may refer to wireless network that has Internet access. In some embodiments, a cellular network may refer to a radio network distributed over land through cells, where each cell includes a transceiver (e.g., a node or base station).

In some embodiments, systems and methods utilize information from a neighbor report to facilitate the hand off to adjacent APs or other network operations. The neighbor report is provided to devices in the basic service set (BSS) from the AP. A neighbor report may refer to data provided from an AP that indicates the APs that are within the area of operation of the AP. The neighbor report can include AP addresses, AP availability, channel information, operational band information (e.g., 2G, 5G, 6G, 60G, LTE, etc.), location information, beam steering information, channel quality, etc. for each AP (e.g., AP target) within range. In some embodiments, systems and methods provide an action frame including the request or response to the request.

A connection may refer to communication instituted between nodes (such as a wireless communication between nodes) for exchanging data according to a protocol in some embodiments. In some embodiments, a connection is established using the three-way or four-way handshake mechanism (via discovery, authentication and association operations) in some embodiments. A secure connection may refer to a connection that provides data in a format that cannot easily be obtained by another party in some embodiments. Various methods can establish a secure connection including but not limited to a data encryption method. In some embodiments, data encryption employs algorithms that encrypt and decrypt the information, including but not limited to: WPA and WPA2 operations under the 802.11 standard (e.g., temporal key integrity protocol (TKIP) and advanced encryption standard (AES). The connection can be a wireless connections to or from a client device (e.g., a STA) and AP or can be between other types of communication devices. The wireless network can be an 802.11 WiFi network (e.g., IEEE 802.11be) in some embodiments. The client device or AP can be implemented in a device including one or more integrated circuits (ICs) packaged in an IC package.

A traffic indication map (TIM) may refer to a structure used in 802.11 wireless network management frames to indicate traffic status in the network. The TIM may refer to data indicating status for devices in the network, such as an information element under section 7.3.2.6 of the IEEE 802.11-1999 standard in some embodiments. The IEEE 802.11 standards use a bitmap to indicate to any sleeping STAs that the AP has buffered data waiting for it. Because client devices should listen to at least one beacon during the listen interval, the AP periodically sends this bitmap in its beacons signals or frames as an information element. In some embodiments, the TIM is a bit mask including 2008 bits, each bit representing the association identification (AID) of a station. However, some situations an AP only has data for a few client devices so only the portion of the bitmap representing those stations needs to be transmitted. A partial bitmap can be referred to as a virtual bitmap, and the portion that is actually transmitted is referred to as a partial virtual bitmap in some embodiments. A field may refer to a portion of a data construct (e.g., a frame) for data having a particular meaning in some embodiments.

An authentication operation may refer to a procedure for how a client device gains access to the network. Authentication provides proof of identity to ensure the client is allowed access to the network. An association operation may refer to a procedure for a client device that has been authenticated to become associated with an AP. Association allows the network to determine where to send data that is intended for a client device (e.g., data is sent through the AP with which the client device is associated). Generally, a client device is only associated with a single AP.

In some embodiments, the systems and methods reduce discovery operations (e.g., discovering the AP using scanning for beacon signals or probe requests). A discovery operation may refer to the communication of frames for discovering the availability and/or identification (ID) of an AP or other wireless device in some embodiments. Discovery operations may involve the communication of probe request frames and probe response frames.

Some embodiments relate to a first device. The first device includes a circuit configured to provide at least one frame across a connection to a second device. The frame includes a first field indicating identification of requested information from the second device. The requested information is one or more of timing information, load information, occupancy level information, target channel information, signal power information, sequence information, neighborhood access point information, or unicast information.

The identification of requested information may refer to a type, identity or other characteristic of the requested information in some embodiments. The requested information from the second device may refer to information sought by a first device from the second device in some embodiments. Timing information may refer to data for synchronizing communication between two or more devices in some embodiments. Timing information can include but is not limited to a low TSF, a next TBTT, or a next DTIM TBTT under the IEE 802.11 standard or similar data.

Load information may refer to data for determining an amount of communication or an amount of available communication between two or more devices in some embodiments. Load information can include but is not limited to a BSS Load, Medium Occupancy Level, My Pending Load, Overall Pending Load, or BCMC Pending Load under the IEE 802.11 standard or similar data.

Occupancy level information may refer to data for determining a number of devices or traffic on a network in some embodiments. Occupancy level can include but is not limited to Medium Occupancy Level, My Pending Load, Overall Pending Load, BCMC Pending Load, Number of WiFi Clients, Number of OBSS devices, or Number of Neighborhood AP under the IEE 802.11 standard or similar data.

Target channel information may refer to data for indicating a new channel for communication between two or more devices in some embodiments. Target channel information can include but is not limited to an Intended Target Channel under the IEE 802.11 standard or similar data.

Signal power information may refer to data for signal strength or quality in some embodiments. Signal power information can include but is not limited to a My RSSI, Transmit Power, or Interference Level under the IEE 802.11 standard or similar data.

Sequence information may refer to data for a succession related to communication between two or more devices in some embodiments. Sequence information can include but is not limited to a Current Sequence for any TID, or Current Sequence for BCMC under the IEE 802.11 standard or similar data.

Neighborhood access point information may refer to data indicating identity or number of APs in a communication environment in some embodiments. Neighborhood access point information can include but is not limited to a Number of Neighborhood AP under the IEE 802.11 standard or similar data.

Unicast information may refer to data indicating a unicast sequence in a communication environment in some embodiments. Unicast information can include but is not limited to a Number of Unicasts under the IEE 802.11 standard or similar data.

The IEEE terms mentioned above are further described with reference to Table I below.

In some embodiments, the frame is provided according to an 802.11 protocol and the connection is established by using an association or authentication operation. In some embodiments the value can indicate the timing information, load information, occupancy level information, target channel information, signal power information, sequence information, neighborhood access point information, and unicast information.

In some embodiments, the frame comprises a second field for a value indicating a number of requests. In some embodiments, the frame comprises a third field for a value indicting a get data request or a get data response. In some embodiments, the value can indicate the timing information, sequence information, neighborhood access point information, and unicast information. A get data request may refer to a request for data using an action frame that includes a category field indicating a get data category in some embodiments. A get data response may refer to a response including requested data in some embodiments. The get data response can be an action frame that includes a category field indicating a get data category in some embodiments.

In some embodiments, the value is timing information and the timing information is a low TSF, a next TBTT, or a next DTIM TBTT. Low TSF may refer to a synchronization parameter such as a parameter associated with low TSF under the IEEE 802.11 standard in some embodiments. Next TBTT may refer to a parameter indicating a time of a next signal such as a parameter associated with next TBTT under the IEEE 802.11 standard in some embodiments. Next DTIM TBTT may refer to a parameter indicating a time of a next mapping message such as a parameter associated with next DTIM TBTT under the IEEE 802.11 standard in some embodiments. In some embodiments, the value is unicast information and the unicast information is a number of pending unicast frames. In some embodiments, the circuit is configured to receive at least one frame across the connection from the second device. The frame from the second device includes a first field including a length field and a value field including the requested information. In some embodiments, the second device comprises an access point.

Some embodiments relate to a first device. The first device includes a circuit configured to provide at least one frame across a connection to a second device. The frame includes a first field including a value indicating requested information by the second device. The value can indicate one or more of timing information, load information, occupancy level information, target channel information, signal power information, sequence information, neighborhood access point information, or unicast information.

In some embodiments, the frame is an action frame including a field indicating a type of response. In some embodiments, the frame includes a second field for a value indicating a number of requests. In some embodiments, the frame includes a third field for a value indicating a length. In some embodiments, the frame is provided according to an 802.11 protocol. Length may refer to a length of the data for the frame in some embodiments. An action frame may refer to a type of management frame used to trigger an action in some embodiments.

Some embodiments relate to a method. The method includes providing a first frame across a connection from a first device to a second device. The first frame includes a first field for indicating two types of requests and two types of responses and a second field comprising a value indicating requested information from the second device. The value can indicate timing information, load information, occupancy level information, target channel information, signal power information, sequence information, neighborhood access point information, or unicast information. The method also includes providing a second frame from the second device to the first device including a first field including a value indicating the requested information by the second device. The value can indicate the timing information, load information, occupancy level information, target channel, signal power information, sequence information, neighborhood access point information, or unicast information.

In some embodiments, the second frame comprises a second field for indicating the two types of requests and the two types of responses. In some embodiments, the value is timing information and the timing information is a low TSF, a next TBTT, or a next DTIM TBTT. In some embodiments, the value can indicate the timing information, load information, occupancy level information, target channel information, signal power information, sequence information, neighborhood access point information, and unicast information. In some embodiments, the first frame comprises a third field for a value indicating a length.

A channel may refer to any portion of the electromagnetic spectrum used to communicate data. The portions can have various bandwidths and can be combined to form wider bandwidths or channels. Channels can have 5 MHz spacing about a center frequency and can occupy a band of at least 20 MHz in some embodiments. In some embodiments, the channels are in the 2G, 5G, 6G or 60 G bands. In some embodiments, the primary control channel is a common channel of operation for all stations (STAs) that are members of the basic service set (BSS). For example, in a 20 MHz, 40 MHz, 80 MHz, 160 MHz or 80+80 MHz, 320 MHz bandwidth BSS, the primary control channel is a 20 MHz channel. The primary control channel is used for transmitting all the management frames. A primary control channel may refer to any channel used to send and receive management frames including but not limited to beacon frames, probe request/response frames, authentication request/response frames, association request/response frames, deauthentication frames, disassociation frames, etc.

A frame may refer to a digital data transmission unit in some embodiments. For example, a frame may refer to a container for a single network packet. A data frame may refer to a frame that contains data in some embodiments. An encrypted frame may refer to a frame that has been encrypted in some embodiments. A broadcast message or broadcast frame may refer to a message or frame that is sent to more than one device in the BSS connected to or communicating with the AP in some embodiments. In some embodiments, the broadcast message or broadcast frame is sent to all the devices in the BSS connected to the AP. A unicast message or unicast frame may refer to a message or frame that has a single destination in some embodiments.

### A. Computing and Network Environment

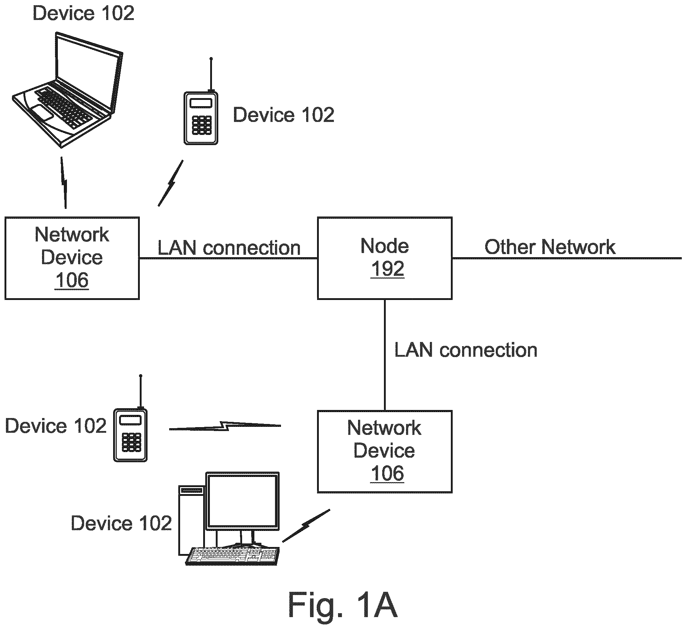

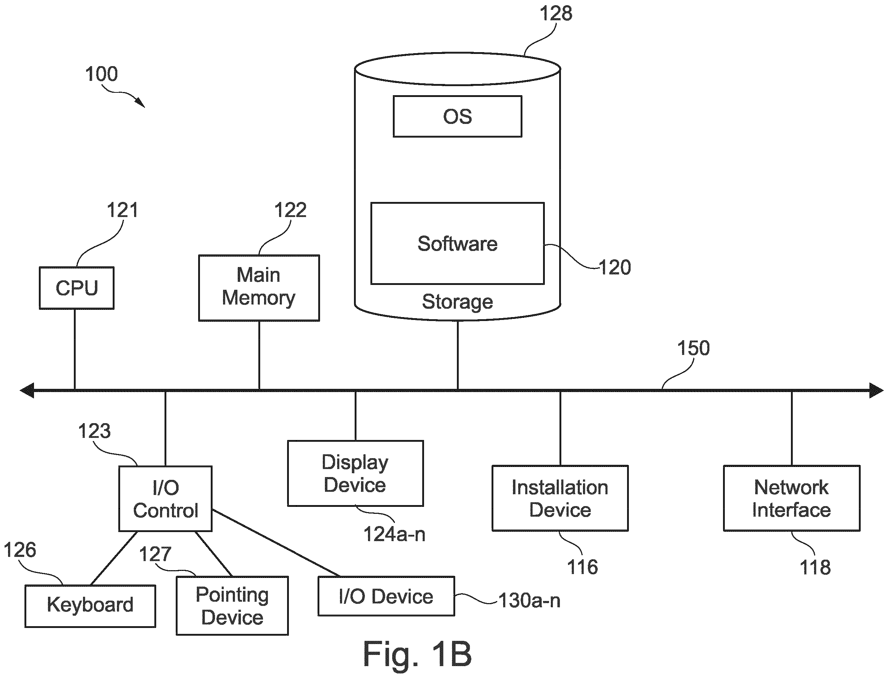

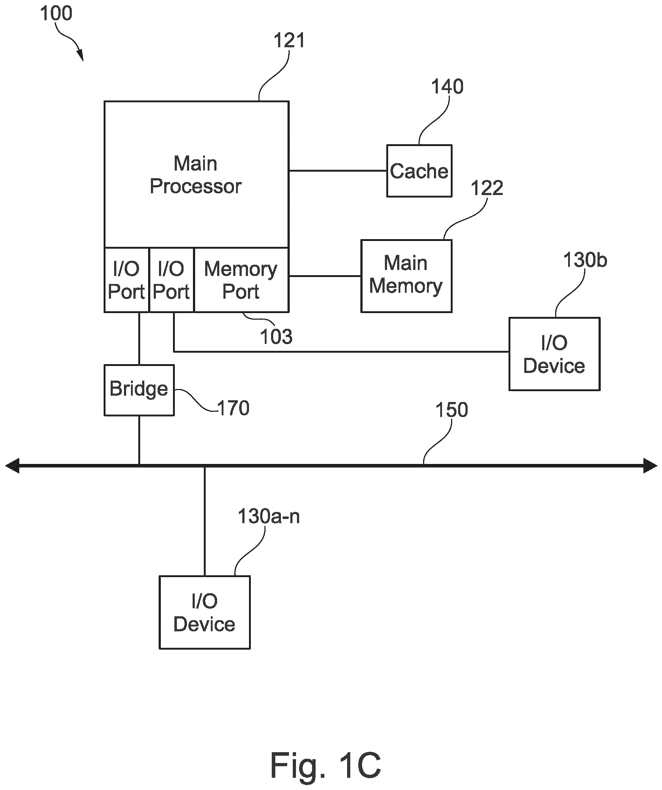

Prior to discussing specific embodiments of the present solution, it can be helpful to describe aspects of the operating environment as well as associated system components (e.g., hardware elements) in connection with the methods and systems described herein. Referring to FIG. 1A, an embodiment of a network environment is depicted. In brief overview, the network environment includes a wireless communication system that includes one or more access points (APs) or network devices 106, one or more client devices (e.g., STAs) or wireless communication devices 102 and a network hardware component or network hardware 192. The wireless communication devices 102 can for example include laptop computers, tablets, personal computers, and/or cellular telephone devices. The details of an embodiment of each station or wireless communication device 102 and AP or network device 106 are described in greater detail with reference to FIGS. 1B and 1C. The network environment can be an ad hoc network environment, an infrastructure wireless network environment, a subnet environment, etc. in one embodiment. The network devices 106 or APs can be operably coupled to the network hardware 192 via local area network connections. Network devices 106 are 5G base stations in some embodiments. The network hardware 192, which can include a router, gateway, switch, bridge, modem, system controller, appliance, etc., can provide a local area network connection for the communication system. Each of the network devices 106 or APs can have an associated antenna or an antenna array to communicate with the wireless communication devices in its area. The wireless communication devices 102 can register with a particular network device 106 or AP to receive services from the communication system (e.g., via a SU-MIMO or MU-MIMO configuration). For direct connections (e.g., point-to-point communications), some wireless communication devices can communicate directly via an allocated channel and communications protocol. Some of the wireless communication devices 102 can be mobile or relatively static with respect to network device 106 or AP.

In some embodiments, a network device 106 or AP includes a device or module (including a combination of hardware and software) that allows wireless communication devices 102 to connect to a wired network using wireless-fidelity (WiFi), or other standards. A network device 106 or AP can sometimes be referred to as a wireless access point (WAP). A network device 106 or AP can be implemented (e.g., configured, designed and/or built) for operating in a wireless local area network (WLAN). A network device 106 or AP can connect to a router (e.g., via a wired network) as a standalone device in some embodiments. In other embodiments, network device 106 or AP can be a component of a router. Network device 106 or AP can provide multiple devices access to a network. Network device 106 or AP can, for example, connect to a wired Ethernet connection and provide wireless connections using radio frequency links for other devices 102 to utilize that wired connection. A network device 106 or AP can be implemented to support a standard for sending and receiving data using one or more radio frequencies. Those standards, and the frequencies they use can be defined by the IEEE (e.g., IEEE 802.11 standards). A network device 106 or AP can be configured and/or used to support public Internet hotspots, and/or on a network to extend the network's Wi-Fi signal range.

In some embodiments, the access points or network devices 106 can be used for (e.g., in-home, in-vehicle, or in-building) wireless networks (e.g., IEEE 802.11, Bluetooth, ZigBee, any other type of radio frequency based network protocol and/or variations thereof). Each of the wireless communication devices 102 can include a built-in radio and/or is coupled to a radio. Such wireless communication devices 102 and /or access points or network devices 106 can operate in accordance with the various aspects of the disclosure as presented herein to enhance performance, reduce costs and/or size, and/or enhance broadband applications. Each wireless communication device 102 can have the capacity to function as a client node seeking access to resources (e.g., data, and connection to networked nodes such as servers) via one or more access points or network devices 106.

The network connections can include any type and/or form of network and can include any of the following: a point-to-point network, a broadcast network, a telecommunications network, a data communication network, a computer network. The topology of the network can be a bus, star, or ring network topology. The network can be of any such network topology as known to those ordinarily skilled in the art capable of supporting the operations described herein. In some embodiments, different types of data can be transmitted via different protocols. In other embodiments, the same types of data can be transmitted via different protocols.

The communications device(s) 102 and access point(s) or network devices 106 can be deployed as and/or executed on any type and form of computing device, such as a computer, network device or appliance capable of communicating on any type and form of network and performing the operations described herein. FIGS. 1B and 1C depict block diagrams of a computing device 100 useful for practicing an embodiment of the wireless communication devices 102 or network device 106. As shown in FIGS. 1B and 1C, each computing device 100 includes a processor 121 (e.g., central processing unit), and a main memory unit 122. As shown in FIG. 1B, a computing device 100 can include a storage device 128, an installation device 116, a network interface 118, an I/O controller 123, display devices 124a-124n, a keyboard 126 and a pointing device 127, such as a mouse. The storage device 128 can include an operating system and/or software. As shown in FIG. 1C, each computing device 100 can also include additional optional elements, such as a memory port 103, a bridge 170, one or more input/output devices 130a-130n, and a cache memory 140 in communication with the central processing unit or processor 121.

The central processing unit or processor 121 is any logic circuitry that responds to and processes instructions fetched from the main memory unit 122. In many embodiments, the central processing unit or processor 121 is provided by a microprocessor unit, such as: those manufactured by Intel Corporation of Santa Clara, California; those manufactured by International Business Machines of White Plains, New York; or those manufactured by Advanced Micro Devices of Sunnyvale, California. The computing device 100 can be based on any of these processors, or any other processor capable of operating as described herein.

Main memory unit 122 can be one or more memory chips capable of storing data and allowing any storage location to be directly accessed by the microprocessor or processor 121, such as any type or variant of Static random access memory (SRAM), Dynamic random access memory (DRAM), Ferroelectric RAM (FRAM), NAND Flash, NOR Flash and Solid State Drives (SSD). The main memory unit 122 can be based on any of the above described memory chips, or any other available memory chips capable of operating as described herein. In the embodiment shown in FIG. 1B, the processor 121 communicates with main memory unit 122 via a system bus 150 (described in more detail below). FIG. 1C depicts an embodiment of a computing device 100 in which the processor communicates directly with main memory unit 122 via a memory port 103. For example, in FIG. 1C the main memory unit 122 can be DRDRAM.

FIG. 1C depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory unit 122 and is provided by, for example, SRAM, BSRAM, or EDRAM. In the embodiment shown in FIG. 1C, the processor 121 communicates with various I/O devices 130 via a local system bus (e.g., system bus 150). Various buses can be used to connect the central processing unit or processor 121 to any of the I/O devices 130, for example, a VESA VL bus, an ISA bus, an EISA bus, a Micro Channel Architecture (MCA) bus, a PCI bus, a PCI-X bus, a PCI-Express bus, or a NuBus. For embodiments in which the I/O device is a video display 124, the processor 121 can use an Advanced Graphics Port (AGP) to communicate with the display 124. FIG. 1C depicts an embodiment of a computer or computer system100 in which the main processor 121 can communicate directly with I/O device 130b, for example via HYPERTRANSPORT, RAPIDIO, or INFINIBAND communications technology. FIG. 1C also depicts an embodiment in which local busses and direct communication are mixed: the processor 121 communicates with I/O device 130a using a local interconnect bus while communicating with I/O device 130b directly.

A wide variety of I/O devices 130a-130n can be present in the computing device 100. Input devices include keyboards, mice, track pads, trackballs, microphones, dials, touch pads, touch screen, and drawing tablets. Output devices include video displays, speakers, inkjet printers, laser printers, projectors and dye-sublimation printers. The I/O devices can be controlled by an I/O controller 123 as shown in FIG. 1B. The I/O controller can control one or more I/O devices such as a keyboard 126 and a pointing device 127, e.g., a mouse or optical pen. Furthermore, an I/O device can also provide storage and/or an installation medium for the computing device 100. In still other embodiments, the computing device 100 can provide USB connections (not shown) to receive handheld USB storage devices such as the USB Flash Drive line of devices manufactured by Twintech Industry, Inc. of Los Alamitos, California.

Referring again to FIG. 1B, the computing device 100 can support any suitable installation device 116, such as a disk drive, a CD-ROM drive, a CD-R/RW drive, a DVD-ROM drive, a flash memory drive, tape drives of various formats, USB device, hard-drive, a network interface, or any other device suitable for installing software and programs. The computing device 100 can further include a storage device, such as one or more hard disk drives or redundant arrays of independent disks, for storing an operating system and other related software, and for storing application software programs such as any program or software 120 for implementing (e.g., configured and/or designed for) the systems and methods described herein. Optionally, any of the installation devices 116 could also be used as the storage device. Additionally, the operating system and the software can be run from a bootable medium.

Furthermore, the computing device 100 can include a network interface 118 to interface to a network through a variety of connections including, but not limited to, standard telephone lines, LAN or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11a, IEEE 802.11b, IEEE 802.11g, IEEE 802.11n, IEEE 802.11ac, IEEE 802.11ad, CDMA, GSM, WiMax and direct asynchronous connections). In one embodiment, the computing device 100 communicates with other computing devices 100' via any type and/or form of gateway or tunneling protocol such as Secure Socket Layer (SSL) or Transport Layer Security (TLS). The network interface 118 can include a built-in network adapter, network interface card, PCMCIA network card, card bus network adapter, wireless network adapter, USB network adapter, modem or any other device suitable for interfacing the computing device 100 to any type of network capable of communication and performing the operations described herein.

In some embodiments, the computing device 100 can include or be connected to one or more display devices 124a-124n. As such, any of the I/O devices 130a-130n and/or the I/O controller 123 can include any type and/or form of suitable hardware, software, or combination of hardware and software to support, enable or provide for the connection and use of the display device(s) 124a-124n by the computing device 100. For example, the computing device 100 can include any type and/or form of video adapter, video card, driver, and/or library to interface, communicate, connect or otherwise use the display device(s) 124a-124n. In one embodiment, a video adapter can include multiple connectors to interface to the display device(s) 124a-124n. In other embodiments, the computing device 100 can include multiple video adapters, with each video adapter connected to the display device(s) 124a-124n. In some embodiments, any portion of the operating system of the computing device 100 can be configured for using multiple display devices 124a-124n. In further embodiments, an I/O device 130 can be a bridge between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a Fibre Channel bus, a fiber optic bus, a Serial Attached small computer system interface bus, a USB connection, or a HDMI bus.

A computing device 100 of the sort depicted in FIGS. 1B and 1C can operate under the control of an operating system, which controls scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: Android, produced by Google Inc.; WINDOWS 7, 8 and 10, produced by Microsoft Corporation of Redmond, Washington; MAC OS, produced by Apple Computer of Cupertino, California; WebOS, produced by Research In Motion (RIM); OS/2, produced by International Business Machines of Armonk, New York; and Linux, a freely-available operating system distributed by Caldera Corp. of Salt Lake City, Utah, or any type and/or form of a Unix operating system, among others.

The computer system or computing device 100 can be any workstation, telephone, desktop computer, laptop or notebook computer, server, handheld computer, mobile telephone or other portable telecommunications device, media playing device, a gaming system, mobile computing device, or any other type and/or form of computing, telecommunications or media device that is capable of communication. In some embodiments, the computing device 100 can have different processors, operating systems, and input devices consistent with the device. For example, in one embodiment, the computing device 100 is a smart phone, mobile device, tablet or personal digital assistant. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

Aspects of the operating environments and components described above will become apparent in the context of the systems and methods disclosed herein.

### B. Protocols for Data Request/ Response Operations and Methods and Devices Using Such Protocols

Disclosed herein are systems and methods that can be used in any communication system including but not limited to Wi-Fi and LTE networks. The systems and methods can be used with an AP or STA in a communication network such as the devices discussed with reference to FIGS. 1A-C. Although embodiments of data request and/or response operations for communications under the IEEE 802.11 standard are described herein, the systems and methods can be used with other networks (e.g., cellular and satellite networks) and in point to point communications.

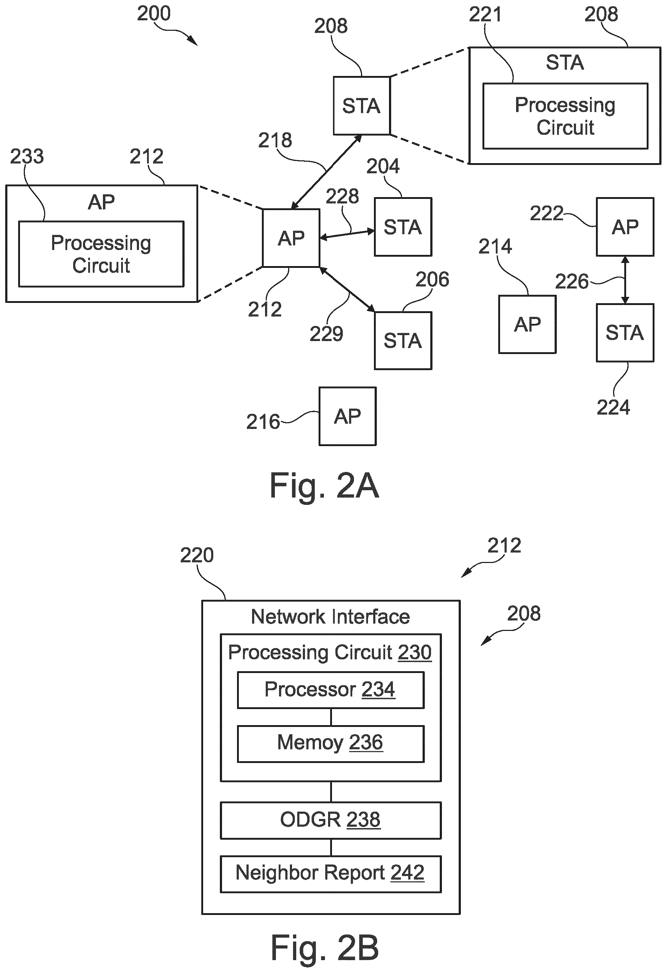

With reference to FIG. 2A, a wireless communication network or system 200 includes client devices or STAs 204, 206, 208, and 224 and APs 212, 214, 216, and 222. STAs 204, 206, 208, and 224 and APs 212, 214, 216, and 222 can be used in the systems discussed with reference to FIGS. 1A-C. Any number of STAs 204, 206, 208, and 224 and APs 212, 214, 216, and 222 can be used in the network or system 200. A STA or client device may refer to any device for communicating in communication system and includes but is not limited to a fixed, portable, or mobile laptop, desktop personal computer, personal digital assistant, work station, wearable device, smart phone, or Wi-Fi phone in some embodiments. An access point or AP may refer to a device for communicatively coupling one or more non-AP devices (e.g., a client device or STA) to a network in some embodiments. An AP may enable non-AP devices to connect and communicate with a network in some embodiments. In some embodiments, an AP is a wireless access point (WAP) configured to enable wireless communication between non-AP devices. An AP includes but is not limited to a mobile, portable, or fixed hot spot, router, bridge, gNB node, eNodeB, evolved node B, or other communication device. An AP can provide services to a STA, such as, serving as a connection point to another network.

STAs 204, 206, 208, and 224 and APs 212, 214, 216, and 222 can each include a wireless transceiver and a various modules for communicating via connections. The modules can be software (e.g., firmware), hardware components, and combinations thereof. In some embodiments, each of STAs 204, 206, 208, and 224 and APs 212, 214, 216, and 222 includes an IEEE 802.11 conformant media access control (MAC) layer circuit and physical (PHY) layer interface to the wireless medium and can be part of a larger device or system. In some embodiments, each of STAs 204, 206, 208, and 224 and APs 212, 214, 216, and 222 operates according to other standards than the IEEE 802.11 standard.

A connection for wireless communication can be established between at least one of STAs 204, 206, 208, and 224 and APs 212, 214, 216, and 222 after authentication and association operations. For example, STA 208 has a connection 218 to AP 212. STAs 204, 206, 208, and 224 each include circuitry (e.g., a processor or processing circuit 221), and APs 212, 214, 216, and 226 each include circuitry (e.g., a processing circuit 233) for establishing and cancelling the connection 218 and communicating data across the connection. In another example, STA 204 has a connection 228 to AP 212, and STA 206 has a connection 229 to AP 222. STAs 204, 206, 208, and 224 each include circuitry (e.g., a processor or processing circuit 221), and APs 212, 214, 216, and 222 each include circuitry (e.g., a processing circuit 233) for operating according to data request and response operations as described below. The connections 218, 228, 229 and 226 are wireless connections formed using an association and/or authorization operation and cancelled using a disassociation and/or deauthentication operation in some embodiments. The connections 218, 228, 229 and 226 can be single link, multilink or dual link connections associated with APs 212 and 222 and can be a secure connection (e.g., using encryption) in some embodiments. In some embodiments, the connections 218, 228, 229 and 226 provide data communications and control and management communications on one or more channels in a 5G, 6G, 60G, or 2G band.

In some embodiments, STAs 204, 206, 208, and 224 and APs 212, 214, 216, and 222 are configured to use an ODGRD protocol to facilitate communication between STAs 204, 206, 208, and 224 and APs 212, 214, 216, and 222. The requested data can be used to facilitate handoff operations, reduce awake times for a client device, reduce transitions form a sleep mode, reduce time for off channel/on channel transitions and other communication operations in some embodiments.

A sleep mode may refer to a mode of operation where a device communicating on a network reduces its communication (e.g., to save power) in some embodiments. In some embodiments, a sleep mode may involve the device being in a mode where it does not receive or transmit data for a time period or until further notice in an existing channel. For example, a STA may be considered in a sleep mode because it is not communicating on a first channel (e.g., a home channel) even though it is using power to communicate on another channel or performing a channel scanning operation on other channels in some embodiments. A periodic sleep mode may refer to a sleep mode that is repeated for a time period in some embodiments.

Referring to FIG. 2B, a device 220 is an AP 212 or STA 208 (FIG. 2A) and is configured for the ODGDR protocol according to some embodiments. In some embodiments, device 220 includes a processing circuit 233, a neighbor report module 242, and an ODGDR module 238. The processing circuit 233 is any circuitry or components that can perform logic and communication processing operations and can include a processor 234 and a memory 236 in some embodiments.

In some embodiments, the processing circuit 230 is implemented as a field-programmable gate array, an application-specific integrated circuit, hardware, a software executing processor, or state machines. In some embodiments, the processing circuit 230 is part of layers (e.g., MAC, network, PHY layers) of IEEE 802.11 standard devices. The processing circuit 230 can be configured to perform communication operations, frame building and processing, get data request and response operations, discovery operations, association operations, authorization operations, connection setup, disassociation operations, handoff operations, and deauthentication operations in some embodiments. Instructions for the processing circuit 230 are stored in a non-transitory medium such as memory 236 in some embodiments. Processing circuit 221 of STA 208 and processing circuit 233 of AP 212 are similar to processing circuit 230 in some embodiments.

The memory 236 may be one or more devices (e.g., RAM, ROM, Flash memory, hard disk storage) for storing data and/or computer code for completing and/or facilitating the various processes described herein. The memory 236 may be or include non-transient volatile memory, non-volatile memory, and non-transitory computer storage media. Memory 236 may include database components, object code components, script components, or any other type of information structure for supporting the various activities and information structures described herein. Memory 236 may be communicably coupled to the processor 234 and include computer code or instructions for executing one or more processes described herein. The processor 234 may be implemented as one or more application specific integrated circuits (ASICs), field programmable gate arrays (FPGAs), a group of processing components, a software executing processor, state machines or other suitable electronic processing components. As such, AP or network device 106 (FIG. 1A) is configured to execute a variety of modules and/or programs and store associated data in a database of the memory 236. The modules (e.g., modules 238 and 242) can be implemented in AP software (e.g., MAC layer or PHY layer software) or STA software (e.g., MAC layer or PHY layer software). In some embodiments, the AP 212 or STA 208 (FIG. 2A) is structured and used to establish connections and hand off access to other computing systems and devices (e.g., wireless communication device(s) 102, network hardware 192, other access points or network devices 106, (FIGS. 1A-C) via a network (e.g., WAN connection, LAN connection, WLAN connection, etc.).

In some embodiments, processing circuit 233 includes a neighbor report module 242. The neighbor report module 242 can be configured to communicatively couple with one or more APs 212, 214, 216, and 222 (FIG. 2A)) and can be configured to determine which APs 212, 214, 216, and 222 are available for connections to STAs 204, 206, 208, and 224. For example, the neighbor report module 242 can produce the neighbor reports in response to information received from other STAs.

In some embodiments, the neighbor report module 242 can be configured to provide a neighbor report in response to a neighbor report request sent from one or more of STAs 204, 206, 208, and 224 to one or more APs 212, 214, 216, and 222. The neighbor report includes information about neighboring APs 212, 214, 216, and 222 that are known candidates for STAs 204, 206, 208, and 224 to re-associate in some embodiments. The neighbor report provides information about the neighboring APs 212, 214, 216, and 222 of the AP that is currently associated to one or more of STAs 204, 206, 208, and 224, and this information may be used as identification of potential candidates for a new point of attachment while roaming. The neighbor report can reduce delays associated with scanning for available APs 212, 214, 216, and 222 (either reducing actively probing for APs or passively listening to every channel for beacon frames). STAs 204, 206, 208, and 224 can instead narrow the list of potential APs down to the known available APs using the neighbor report which is especially useful in high density environments where multiple WLANs can be heard by STAs 204, 206, 208, and 224. In some embodiments, the use of the neighbor report also reduces power consumption by STAs 204, 206, 208, and 224 (e.g., due to scanning) and allows more efficient use of the mediums of STAs 204, 206, 208, and 224.

In some embodiments, the ODGDR module 238 is configured to provide a request and/or respond to a request for various types data. For example, the ODGDR module 238 is configured to cause device 220 provide a query after an off-channel operation in some embodiments. When device 220 (e.g., one of STAs 204, 206, 208, and 224) goes off-channel for a scan or neighbor awareness networking (NAN) and comes back to the operating channel associated with a connection to one of APs 212, 214, 216, and 222, the device 220 determines if the device 220 can enter a sleep mode or stay awake for data packets from the connection. In some embodiments, the ODGDR module 238 queries for return of a partial virtual bit IE that indicates the data availability for the device 220 (e.g., client device) from the AP. If the partial virtual bit IE indicates that there is no data available for the device 220 from the AP (e.g., no data traffic available), the device 220 returns to a sleep mode. The query enables additional power saving for the device 220 because the device 220 does not need to stay awake for the next beacon frame in some embodiments. The partial virtual bit IE can be provided in a frame (e.g., an action frame) and can be a traffic information management IE.

In some embodiments, the ODGDR module 238 is configured to cause device 220 provide a query when there are drifts in the timelines between devices (e.g., between a STA and AP). For example, when device 220 (e.g., one of STAs 204, 206, 208) enters an always awake state, device 220 provides a request to obtain information to align with the time synchronization function (TSF) (timeline) of the AP. Generally, a STA (e.g., one of STAs 204, 206, 208, and 224) generally does not have information about the amount of drift of the clock of the STA from the clock of the AP. Without providing the request, the device 220 waits in listen mode for up to two intervals between beacon frames (to account for potential missing of a beacon frame) which results in unnecessary consumption of power. Further, without providing the request, the STA needs to align the beacon frames when APs provide irregular beacons and the STA needs to align to the beacon frames. By providing a query for information for clock alignment, the device 220 can synchronize without waiting for two beacon frames. Upon clock alignment, the device can enter sleep mode. The information for clock alignment can be a current TSF and a next target beacon transmission time (TBTT).

In some embodiments, the ODGDR module 238 is configured to cause device 220 provide a query for information related to broadcast and multicast frames. For example, when one of APs 212, 214, 216, and 222 that is currently associated to one or more of STAs 204, 206, 208, and 224 has broadcast or multicast packets (BCMC packets) to transmit to device 220 (e.g., one of STAS 204, 206, 208) and other client devices, the AP sends those packets after sending a delivery traffic information map (DTIM) beacon frame (e.g., a beacon frame whose DTIM count is zero) in some embodiments. Generally, the DTIM period is 3 seconds in most of the APs and assuming the beacon interval is 100 timing units (Tus, e.g., 102.4 ms), the DTIM beacon frame is sent every 307.2 ms. Generally, a listen interval is configured to be 20 beacon intervals which is 2.048 secs (assuming 100 TUs as a beacon interval). Therefore, device 220 can sleep up to 20 beacon intervals and the AP will buffer the unicast packets. To receive the broadcast or multicast packets (BCMC packets), the device needs to wake up every DTIM beacon interval. If device 220 goes to low power mode and wakes up once every listen interval, device 220 may lose/miss the BCMC packets.

According to one example, the BCMC packets are generated at some regular periodicity (e.g., 2.048 seconds), the AP indicates in the next DTIM beacon where the BCMC packet can be expected) using an IE (similar to the next beacon transmission time (TBTT)) request discussed above) in some embodiments. The device 220 can send a request when the STA wants to sleep for the IE indicating when the next BCMC packet can be expected and wake up once every listen interval to avoid missing the BCMC packets.

An example request can include the following IEs listed in Table 1 below. The ODGR module 238 supports requesting specific information from APs 212, 214, 216, and 222 on a need basis instead of waiting for the AP to send the details sought by the device 220. The request can be provided in a frame. The request may refer to a code, message or frame (e.g., action code or frame) sent by the client device to the AP or vice versa to request information in some embodiments. In some embodiments, the request is a frame sent by the client device to the AP to request any information provided in Table I below.

**Table I - Request IEs**

| **Type of Request** | **Type of Request Description** |
|---|---|
| 0 | Low TSF |
| 1 | My RSSI |
| 2 | BSS Load |
| 3 | Medium Occupancy Level |
| 4 | My Pending Load |
| 5 | Overall Pending Load |
| 6 | BCMC Pending Load |
| 7 | Next TBTT |
| 8 | Intended Target Channel |
| 9 | Transmit Power |
| 10 | Interference Level |
| 11 | Next DTIM TBTT |
| 12 | Number of WiFi Clients |
| 13 | Number of OBSS devices |
| 14 | Number of Neighborhood AP |
| 15 | Current PN Sequence for TID-0 |
| 16 | Current PN Sequence for TID-1 |
| 17 | Current PN Sequence for TID-2 |
| 18 | Current PN Sequence for TID-3 |
| 19 | Current PN Sequence for TID-4 |
| 20 | Current PN Sequence for TID-5 |
| 21 | Current PN Sequence for TID-6 |
| 22 | Current PN Sequence for TID-7 |
| 23 | Number of Pending Unicasts TID-0 |
| 24 | Number of Pending Unicasts TID-1 |
| 25 | Number of Pending Unicasts TID-2 |
| 26 | Number of Pending Unicasts TID-3 |
| 27 | Number of Pending Unicasts TID-4 |
| 28 | Number of Pending Unicasts TID-5 |
| 20 | Number of Pending Unicasts TID-6 |
| 30 | Number of Pending Unicasts TID-7 |
| 31 | Current PN Sequence for BCMC |
| 33 - 65535 | Reserved |

Operations related to the IEs listed in Table I are discussed below. The IEs can be provided in a field of an action frame in some embodiments.

In response to the Low TSF IE, the AP returns the least significant bits (LSB) 16-bits of its Low TSF value which can represent a maximum 65.6356 milliseconds. This value can be used on the client side for adjusting clock drifts if any.

In response to the My RSSI IE, the AP returns the received signal strength indicator (RSSI) of the client device at the AP side in some embodiments. This information assists the client device in determining how well the AP is receiving the client device signal in some embodiments. The client device can use this information to determine channel quality or whether transition to another AP is desired in some embodiments.

In response to the BSS Load IE, the AP returns the load of the APs within its own BSS in some embodiments. This information assists the client device in determining how much the AP is loaded with client activities in some embodiments. The determination can be used to determine if the client device should seek a connection with another AP.

In response to the Medium Occupancy Level IE, the AP returns the medium occupancy level that considers its own load, other OBSS load and other interference in some embodiments. This information allows the client device to assess the AP's environment and how busy the AP is in some embodiments. The determination can be used to determine if the client device should seek a connection with another AP.

In response to the My Pending Load IE, the AP returns how much unicast data is pending on the AP side to deliver it to the client in some embodiments. This information is used by the client device to determine if it should stay awake for more time to get its data delivered in some embodiments.

In response to the Overall Pending Load IE, the AP returns how much unicast data is pending on the AP side to deliver to all the clients in some embodiments. This information is used by the client device to determine how much data the AP is going to deliver to all the clients and decide to keep itself awake in some embodiments.

In response to the BCMC Pending Load IE, the AP returns how much broadcast/multicast data is pending on the AP side for delivery to the BSS in some embodiments. Accordingly, the client device may stay awake in response to this information in some embodiments.

In response to the Next TBTT, IE, the AP provides the next target beacon transmission time in microseconds in some embodiments. When the AP skips the beacon transmission, the value could be more than the beacon interval and allows the client device to determine times to be awake for the next beacon transmission in some embodiments.

In response to the Intended Target Channel IE, the AP provides the preferred channel if the AP is willing to switch the channel in some embodiments. If the AP is unwilling to switch the channel, the AP may return the existing channel or channel 0 in some embodiments.

In response to the Transmit Power IE, the AP's transmit power in dBm is provided in some embodiments. The client device can use this information to determine channel quality or whether transition to another AP is desired in some embodiments.

In response to the Interference Level IE, the AP's interference level (% of Non-WiFi Signal reception) is provided in some embodiments. The client device can use this information to determine channel quality or whether transition to another AP is desired in some embodiments.

In response to the Next DTIM TBTT filed, the AP provides the time of the next target DTIM beacon transmission time in microseconds in some embodiments. The client device can use this information for determining when to enter or exit a sleep mode in some embodiments.

In response to the Number of WiFi Clients, the AP provides the number of WiFi clients that the AP is presently servicing in some embodiments. The client device can use this information to determine channel quality or whether transition to another AP is desired in some embodiments.

In response to the Number of OBSS Devices IE, the number of WiFi devices the AP is sensing in the same channel is provided including those devices that are not part of the BSS. The devices can be APs or client devices in some embodiments. The client device can use this information to determine channel quality or whether transition to another AP is desired in some embodiments.

In response to the Number of Neighborhood APs IE, the AP provides the number of Neighborhood APs configured with the same SSID in the vicinity of the AP in some embodiments. The client device can use this information to determine channel quality or whether transition to another AP is desired in some embodiments.

In response to the Current pseudo-random (PN) Sequence for TID-X IE, the AP provides the PN Sequence number to be delivered to the client device from the particular Traffic Identifier in some embodiments.

In response to the Number of Pending Unicast TID-X, the AP provides the number of unicast packets specific to the TID, pending at the AP side for delivery in some embodiments. The client device can use this information for determining when to enter or exit a sleep mode in some embodiments.

In response to the Current PN Sequence for BCMC, the PN Sequence number to be delivered to the client device for the BCMC packet is provided in some embodiments.

In some embodiments, the request is provided in an IEEE802.11 action frame format by device embodied as a WiFi client device to request the AP to provide specific information.

Device 220 which is connected with an AP can send an SA-Query Get Data Request to the AP anytime when the device 220 needs the data from the AP. This action frame is a protected frame similar to a security association (SA)-query in some embodiments. Any unprotected action frames of such frames are generally rejected and not honored by the AP in some embodiments. The existing SA-Query Action frame has room for enhancements can be used for the requests described above (e.g., a Get Data Request).

On the AP side, upon receiving the SA-Query Get Data Request frame, upon successful decryption, the AP can respond with the required data using the SA-Query Get Data Response Frame. In some embodiments, the SA-Query Action Frame Category is modified to have more than 2 action codes (e.g., more than 0 SA-Query Request and 1 SA-Query Response). For example, additional action codes can be an On Demand Get response or request (e.g., a Query Get Data Request and/or a SA-Query Get Data Response) in some embodiments. In some embodiments, the existing 2 bytes of the transaction identifier IE in the regular SA-Query frame is not required.

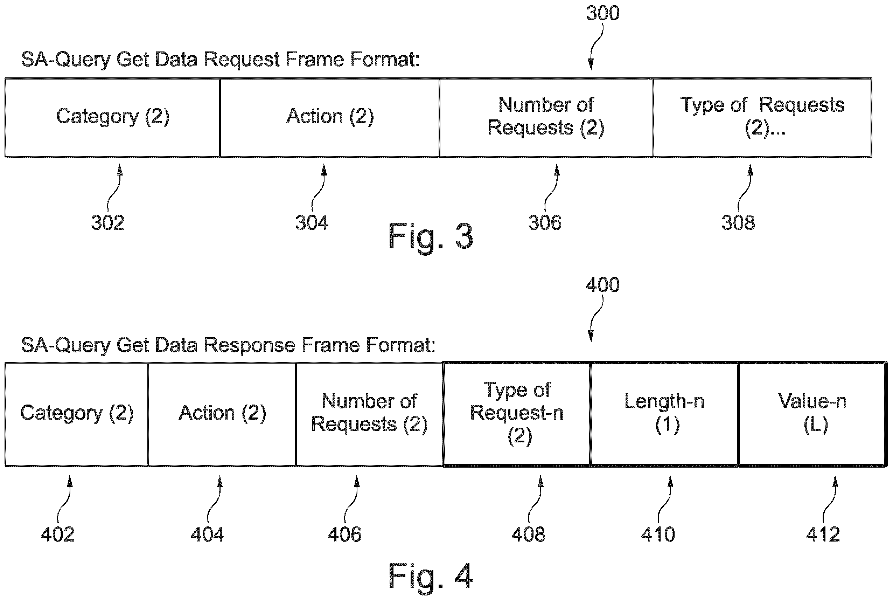

With reference to FIG. 3, an SA SA-Query Get Data Request 300 includes a category field 302, an action field 304, a number of requests field 306, and a type of request field 308 in some embodiments. The Type of Request field 308 is a 2 byte field including a number of the type of request field in Table I in some embodiments. The Number of Requests field 306 is two byte field indicating the number of Type of Request fields the frame carries in some embodiments. The Type of Request field 306 is appended one by one in some embodiments. For example, to request the low TSF and "Next DTIM TBT, the Type of Request fields are 0x0000 and 0x000c. The Frame Size is 2 + 2 + 2 + (N * 2) = 6 + (2 * N) wherein N is an integer.

With reference to FIG. 4, an SA-Query Get Data Response 400 includes a category field 402, an action field 404, a number of requests field 406, a type of request field 408, a length field 410, and a value field 412 in some embodiments. The SA-Query Get Data Response 400 fetches the value corresponding to the Type of Request. With the requested Type of Request number in filed 408, the device 220 is able to easily correlate the value when multiple outstanding single requests are pending. The length of the returned value is passed in the Length field 410. The fields 408, 410, and 412 would be repeated according to the Number of Requests in fields 306 and 406. The Frame Size is 6 + variable size according to the Number of Requests and the Length field of each request in some embodiments. A value of 0 in the Number of Requests field 306 is invalid and can be ignored by the responder or AP in some embodiments. The maximum length of the proposed action frames is guided by the 802.11 specification in some embodiments. The value field contains 412 contains the requested information. A length of 0 implies that the corresponding value is 0 and hence the value field 412 will not be present in the frame in some embodiments.

Category fields 302 and 402 indicate the action frame type. Examples of different category types of action frames include but are not limited to:
0 - Spectrum Management
1 : QoS
2 : DLS
3 : Block ACK
4 : Public
5 : Radio Measurement
6 : Fast BSS Transition
7 : High Throughput (HT)
8 : SA Query
9 : Protected dual of public action
10-125 : Reserved/Unused
126 : Vendor specific protected
127 : Vendor specific
128-255: Error
The IEEE 802.11 standard defines the action field types above. In addition, the action field types for fields 304 and 404 can include a code for an SA- Response, an SA- Request, SA-Query Get Data Response or an SA-Query Get Data Request in some embodiments. Codes for the SA-Response, and SA- Request are provided in the 802.11 standard.

It should be noted that certain passages of this disclosure can reference terms such as "first" and "second" in connection with subsets of frames, response, and devices, for purposes of identifying or differentiating one from another or from others. These terms are not intended to merely relate entities (e.g., a first device and a second device) temporally or according to a sequence, although in some cases, these entities can include such a relationship. Nor do these terms limit the number of possible entities (e.g., STAs, APs, beam formers and/or beam formees) that can operate within a system or environment. It should be understood that the systems described above can provide multiple ones of any or each of those components and these components can be provided on either a standalone machine or, in some embodiments, on multiple machines in a distributed system. Further still, bit field positions can be changed and multibit words can be used. In addition, the systems and methods described above can be provided as one or more computer-readable programs or executable instructions embodied on or in one or more articles of manufacture, e.g., a floppy disk, a hard disk, a CD-ROM, a flash memory card, a PROM, a RAM, a ROM, or a magnetic tape. The programs can be implemented in any programming language, such as LISP, PERL, C, C++, C#, or in any byte code language such as JAVA. The software programs or executable instructions can be stored on or in one or more articles of manufacture as object code. Circuitry may refer to any electronic circuits or circuits.

Circuitry or circuit may refer to any electronic circuit or combination of circuits. To the extent that a device, circuit, processor or circuitry is described or recited in a claims as performing one or more operations or functions or as configured to perform to one or more operations or functions, the performance of the recited function(s) or operation(s) can be distributed across two or more devices, circuits, or processors without departing from the scope of the claims unless those functions or operations are explicitly recited as being performed on a specific single circuit or set of circuits, processor, or device (e.g., using the phrase "on a single circuit", "on the set of circuits comprising" or "on a single device").

While the foregoing written description of the methods and systems enables one of ordinary skill to make and use embodiments thereof, those of ordinary skill will understand and appreciate the existence of variations, combinations, and equivalents of the specific embodiment, method, and examples herein. For example, specific values for bandwidths, channels and sub bands discussed above are exemplary. The present methods and systems should therefore not be limited by the above described embodiments, methods, and examples, but by all embodiments and methods within the scope and spirit of the disclosure.

## Claims

1. A first device (100, 220), comprising:
a circuit (233) configured to provide at least one frame across a connection to a second device (102, 204, 206, 208, 224), the frame comprising a first field comprising identification of requested information from the second device (102, 204, 206, 208, 224), wherein the identification of the requested information comprises identification of one or more of timing information, load information, occupancy level information, target channel information, signal power information, sequence information, neighborhood access point information, or unicast information.

2. The first device (100, 220) of claim 1, wherein the frame is provided according to an 802.11 protocol and the connection is established by using an association or authentication operation.

3. The first device (100, 220) of claim 1 or 2, wherein the requested information comprises the timing information, load information, occupancy level information, target channel information, signal power information, sequence information, neighborhood access point information, and unicast information.

4. The first device (100, 220) of any of claims 1 to 3, wherein the frame comprises a second field for a value indicating a number of requests.

5. The first device (100, 220) of any of claims 1 to 4, wherein the frame comprises a third field for a value indicating a get data request or a get data response.

6. The first device (100, 220) of any of claims 1 to 5, wherein the identification can indicate the timing information, sequence information, neighborhood access point information, and unicast information.

7. The first device (100, 220) of any of claims 1 to 6, wherein the requested information comprises the timing information and the timing information is a low time synchronization function (TSF), a next target beacon transmission time (TBTT), or a next delivery traffic information map (DTIM) TBTT.

8. The first device (100, 220) of any of claims 1 to 7, comprising at least one of the following features:
wherein the requested information comprises unicast information and the unicast information comprises a number of pending unicast frames;
wherein the circuit (233) is configured to receive at least one frame across the connection from the second device (102, 204, 206, 208, 224), the frame from the second device (102, 204, 206, 208, 224) comprising a first field comprising a length field and a value field, the value field comprising the requested information;
wherein the second device (102, 204, 206, 208, 224) comprises an access point.

9. A first device (100, 220), comprising:
a circuit (233) configured to provide at least one frame across a connection to a second device (102, 204, 206, 208, 224), the frame comprising first field comprising a value indicating requested information by the second device (102, 204, 206, 208, 224), wherein the value indicates at least one of timing information, load information, occupancy level information, target channel information, signal power information, sequence information, neighborhood access point information, or unicast information requested by the second device (102, 204, 206, 208, 224).

10. The first device (100, 220) of claim 9, comprising at least one of the following features:
wherein the frame is an action frame comprising a field indicating a type of response;
wherein the frame comprises a second field for a value indicating a number of requests;
wherein the frame comprises a third field for a value indicating a length;
wherein the frame is provided according to an 802.11 protocol.

11. A method, comprising:
providing a first frame across a connection from a first device (100, 220) to a second device (102, 204, 206, 208, 224), the first frame comprising a first field for indicating two types of requests and two types of responses and a second field comprising a value indicating identification of requested information from the second device (102, 204, 206, 208, 224), wherein the value indicates identification of timing information, load information, occupancy level information, target channel information, signal power information, sequence information, neighborhood access point information, or unicast information; and
receiving a second frame from the second device (102, 204, 206, 208, 224) at the first device (100, 220), the second frame comprising a first field comprising a value indicating the requested information from the second device (102, 204, 206, 208, 224), wherein the value from the second device (102, 204, 206, 208, 224) indicates the timing information, load information, occupancy level information, target channel, signal power information, sequence information, neighborhood access point information, or unicast information.

12. The method of claim 11, wherein the second frame comprises a second field for indicating the two types of requests and the two types of responses.

13. The method of claim 11 or 12, wherein the value is timing information and the timing information is a low TSF, a next TBTT, or a next delivery traffic information map (DTIM) TBTT.

14. The method of claim 13, wherein the value from the second device (102, 204, 206, 208, 224) can indicate the timing information, load information, occupancy level information, target channel information, signal power information, sequence information, neighborhood access point information, and unicast information.

15. The method of any of claims 11 to 14, wherein the first frame comprises a third field for a value indicating a length.
